Europäisches Patentamt

European Patent Office

Office européen des brevets

(19)

(11) Publication number: **0 039 990**
**A1**

(12) # EUROPEAN PATENT APPLICATION

(21) Application number: **81301355.4**

(22) Date of filing: **27.03.81**

(51) Int. Cl.³: **C 08 L 23/22**

(30) Priority: **28.03.80 JP 39009/80**

(43) Date of publication of application:
**18.11.81 Bulletin 81/46**

(84) Designated Contracting States:
**DE FR GB**

(71) Applicant: BRIDGESTONE TIRE COMPANY LIMITED
10-1, Kyobashi 1-Chome Chuo-Ku
Tokyo(JP)

(72) Inventor: Kato, Shingo
19-3, Kamiikedai 2-Chome Ohta-Ku
Tokyo(JP)

(72) Inventor: Nakauchi, Hideo
3A-5, BS Tonogaya Apt. 827, Kashio-cho, Totsuka-ku
Yokohama City(JP)

(72) Inventor: Ando, Yukio
226, Kamiyabe-Cho Totsuka-Ku
Yokohama City(JP)

(74) Representative: Whalley, Kevin et al,
Marks & Clerk 57/60 Lincoln's Inn Fields
London WC2A 3LS(GB)

(54) **Butyl rubber composition.**

(57) A butyl rubber composition having excellent mechanical strength as well as high heat resistance, ozone resistance and damping properties comprises 90-60 parts by weight of butyl rubber, 10-40 parts by weight of halogenated butyl rubber, and not more than 50 parts by weight of carbon black based on 100 parts by weight of the total amount of the above rubber components. In this composition, a part of the rubber components may be replaced by ethylene-propylene terpolymer.

EP 0 039 990 A1

Croydon Printing Company Ltd.

## "BUTYL RUBBER COMPOSITION"

This invention relates to a butyl rubber composition having excellent mechanical strength as well as high heat resistance, ozone resistance and damping properties, which is prepared by compounding not more than a predetermined amount of carbon black with a rubber blend of butyl rubber and halogenated butyl rubber, a part of which may be replaced by ethylene-propylene terpolymer (EPT), in a particular blending ratio.

Butyl rubbers have mainly been used for tire tubes of vehicles owing to their excellent gas permeability. At the same time, they have been increasingly used for various industrial goods such as steam hoses, belts, fenders, rubber vibration isolators, and vehicle parts owing to their excellent heat resistance, ozone resistance and damping properties. However, butyl rubber has a slow curing rate and poor general properties, so that its use is restricted to a certain extent. In order to overcome these drawbacks, there has been attempted the halogenation of butyl rubber, and as a result chlorinated butyl rubber and brominated butyl rubber in particular have become commercially available.

Halogenated butyl rubbers have good mechanical strengths and good curing rates as compared with ordinary butyl rubber, but have low crosslinking densities.

0039990

The present invention therefore aims to overcome or at least mitigate the above-mentioned drawbacks by using butyl rubber together with halogenated butyl rubber in a particular blend ratio.

Accordingly, the present invention provides a butyl rubber composition which comprises 90 to 60 parts by weight of butyl rubber, 10 to 40 parts by weight of halogenated butyl rubber, and not more than 50 parts by weight of carbon black based on 100 parts by weight of the total amount of the said rubber components.

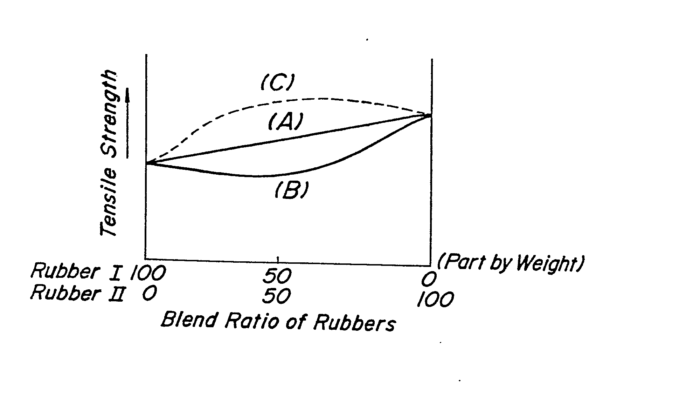

In the following description reference will be made to the accompanying drawing, which is a graph showing the relation between the blend ratio of two rubbers and the tensile strength of the resulting rubber composition.

In general, it is well-known that when combining two kinds of general-purpose rubbers, the tensile strength becomes curved downward in accordance with the variation of the blend ratio between the rubbers, as shown by the curve (B) in the drawing, while when using the most preferable combination of two rubbers, the tensile strength becomes an arithmetically straight line as shown by the curve (A) (RCT, Vol. 49, No.1, 1976, page 112). On the other hand, it has been found that in accordance with the invention, when a butyl rubber is combined with a halogenated butyl rubber in a blend ratio of 90/10-60/40 (parts by weight) and carbon black is added thereto in an amount of not more than 50 parts by weight, the tensile strength is superior as compared with the use of the butyl rubber or the halogenated butyl rubber alone, and tends to become curved upward as shown by the curve (C) in the drawing. Furthermore, it has been found that even when the blend ratio of the butyl rubber and the halogenated butyl rubber is within the above defined range, if the amount of carbon black is not less than 51 parts by weight, the tensile strength becomes related to a straight line corresponding to the curve (A) in the drawing and hence the desired effect is not obtained in the case of using more than 50 parts by weight of carbon black.

The butyl rubber to be used in the invention may be any regular grade usually used. The halogenated butyl rubber is preferably chlorobutyl rubber or bromobutyl rubber.

Moreover, the vulcanizate of butyl rubbers as mentioned above is often apt to be softened due to heat aging. Therefore, a part of butyl rubber-halogenated butyl rubber combination may be replaced with ethylene-propylene terpolymer (EPT) capable of curing due to heat aging, whereby the softening tendency upon heat aging can be mitigated as compared with the case of using an unsubstituted butyl rubber-halogenated butyl rubber system. In this case, the amount of EPT added is 10-20 parts by weight. If the amount of EPT is outside the above defined range, the addition effect of EPT may not be obtained.

To the butyl rubber composition according to the invention is added a curing system of the type used in conventional butyl rubber compositions and other additives such as a softener, and the composition is then cured for use in various industrial goods such as steam hoses, belts, fenders, rubber vibration isolators, and vehicle parts.

The amount of the softener added is preferably not more than 15 parts by weight based on the amount of carbon black.

The invention will now be further described with reference to the following illustrative examples.

EXAMPLE 1

In this example, a tensile test was made with respect to butyl rubber-chlorobutyl rubber compositions and butyl rubber-bromobutyl rubber compositions, each having a compounding recipe as shown in the following Table 1, after curing to obtain a result as shown in Table 1.

Table 1

| Compound-ing recipe (part by weight) \ Run No. | 1 | 2 | 3 | 4 | 5 | 6 | 7 | 8 | 9 | 10 | 11 |
|---|---|---|---|---|---|---|---|---|---|---|---|
| IIR 268 *1 | 100 | 90 | 80 | 60 | 40 | - | 90 | 80 | 60 | 40 | - |
| Cℓ-IIR *2 | - | 10 | 20 | 40 | 60 | 100 | - | - | - | - | - |
| Br-IIR *3 | - | - | - | - | - | - | 10 | 20 | 40 | 60 | 100 |
| SRF *4 | 30 | 30 | 30 | 30 | 30 | 30 | 30 | 30 | 30 | 30 | 30 |
| Stearic acid | 1 | 1 | 1 | 1 | 1 | 1 | 1 | 1 | 1 | 1 | 1 |
| Spindle oil | 10 | 10 | 10 | 10 | 10 | 10 | 10 | 10 | 10 | 10 | 10 |
| Zinc white | 5 | 5 | 5 | 5 | 5 | 5 | 5 | 5 | 5 | 5 | 5 |
| Sulfur | 1 | 1 | 1 | 1 | 1 | 1 | 1 | 1 | 1 | 1 | 1 |
| Vulcanization accelerator TT *5 | 1 | 1 | 1 | 1 | 1 | 1 | 1 | 1 | 1 | 1 | 1 |
| Vulcanization accelerator DM *6 | 0.5 | 0.5 | 0.5 | 0.5 | 0.5 | 0.5 | 0.5 | 0.5 | 0.5 | 0.5 | 0.5 |
| Tensile strength (kg/cm$^2$) | 98.7 | 128 | 144 | 138 | 125 | 99 | 121 | 144 | 151 | 136 | 136 |
| Elongation (%) | 610 | 690 | 750 | 900 | 900 | 820 | 690 | 770 | 870 | 950 | 870 |
| 100% modulus (kg/cm$^2$) | 7.2 | 6.6 | 6.1 | 4.0 | 4.5 | 5.0 | 6.6 | 6.1 | 5.0 | 4.8 | 5.6 |

Note) *1 : IIR 268 is a butyl rubber made by Japan Synthetic Rubber Co., Ltd.
*2 : Cℓ-IIR is a chlorobutyl rubber, trade name HT-1066, made by Exxon Chemical Corp.
*3 : Br-IIR is a bromobutyl rubber, trade name X2, made by Polysar Limited.
*4 : SRF is Semi Reinforcing Furnace Black
*5 : TT is tetramethylthiuram disulfide.
*6 : DM is dibenzothiazyl disulfide.

As apparent from Table 1, when the blend ratio of butyl rubber/halogenated butyl rubber is within a range of 90/10-60/40, both the butyl rubber-chlorobutyl rubber (IIR·Cl-IIR) composition and the butyl rubber-bromobutyl rubber (IIR·Br-IIR) composition exhibit a high tensile strength as compared with the use of butyl rubber or halogenated butyl rubber alone. In particular, the tensile strength becomes a maximum when the blend ratio is approximately 80/20-60/40.

EXAMPLE 2

In this example, a tensile test was made with respect to butyl rubber-bromobutyl rubber compositions, each having a compounding recipe as shown in the following Table 2, after curing to obtain a result as shown in Table 2.

Table 2

| Run No.<br>Compound-<br>ing recipe<br>(part by weight) | 12 | 13 | 14 | 15 | 16 |
|---|---|---|---|---|---|
| IIR 268 | 100 | 80 | 60 | 40 | - |
| Br - IIR | - | 20 | 40 | 60 | 100 |
| SRF | 10 | 10 | 10 | 10 | 10 |
| Spindle oil | 5 | 5 | 5 | 5 | 5 |
| Stearic acid | 1 | 1 | 1 | 1 | 1 |
| Zinc white | 5 | 5 | 5 | 5 | 5 |
| Sulfur | 1 | 1 | 1 | 1 | 1 |
| Vulcanization accelerator TT | 1 | 1 | 1 | 1 | 1 |
| Vulcanization accelerator DM | 0.5 | 0.5 | 0.5 | 0.5 | 0.5 |
| Tensile strength $(kg/cm^2)$ | 77 | 151 | 196 | 176 | 162 |
| Elongation (%) | 640 | 740 | 910 | 930 | 860 |
| 100% modulus $(kg/cm^2)$ | 5.7 | 5.9 | 4.7 | 4.9 | 5.7 |

## Comparative Example 1

When 65 parts by weight of carbon black was added to butyl rubber-chlorobutyl rubber compositions having a compounding recipe as shown in the following Table 3, the hange of the tensile strength of the resulting vulcanizate

0039990

becomes approximately linear as apparent from the results of Table 3 and does not exhibit the effect as in the case of using not more than 50 parts by weight of carbon black. That is, it can be seen from the results of Tables 2 and 3 that the rubber composition according to the invention develops the desired effect only when the amount of carbon black is as relatively low as not more than 50 parts by weight.

Table 3

| Run No.<br>Compound-<br>ing recipe<br>(part by weight) | 17 | 18 | 19 | 20 | 21 |
|---|---|---|---|---|---|
| IIR 268 | 100 | 80 | 60 | 40 | - |
| Cℓ-IIR | - | 20 | 40 | 60 | 100 |
| GPF  *7 | 65 | 65 | 65 | 65 | 65 |
| Polyac  *8 | 0.1 | 0.1 | 0.1 | 0.1 | 0.1 |
| Stearic acid | 1 | 1 | 1 | 1 | 1 |
| Spindle oil | 20 | 20 | 20 | 20 | 20 |
| Zinc white | 5 | 5 | 5 | 5 | 5 |
| Sulfur | 1.5 | 1.5 | 1.5 | 1.5 | 1.5 |
| Vulcanization accelerator TT | 1 | 1 | 1 | 1 | 1 |
| Vulcanization accelerator DM | 0.5 | 0.5 | 0.5 | 0.5 | 0.5 |
| Tensile strength $(kg/cm^2)$ | 117 | 114 | 119 | 107 | 103 |
| Elongation (%) | 550 | 520 | 650 | 610 | 650 |
| 100% modulus $(kg/cm^2)$ | 16.8 | 13.1 | 9.3 | 9.4 | 10.1 |

Note) *7 :  GPF is General Purpose Furnace black.

*8 :  activator, made by Du Pont Nemours, E.I.

### Example 3

In this example, a tensile test was made with respect to butyl rubber-bromobutyl rubber compositions, a part of each of which being replaced with EPT as shown in the following Table 4, after curing to obtain a result as shown in Table 4.

### Table 4

| Run No.<br>Compounding recipe<br>(part by weight) | 22 | 23 | 24 | 25 |
|---|---|---|---|---|
| IIR 268 | 80 | 60 | 40 | - |
| EPT | 20 | 20 | 20 | 20 |
| Br - IIR | - | 20 | 40 | 80 |
| SRF | 30 | 30 | 30 | 30 |
| Spindle oil | 10 | 10 | 10 | 10 |
| Stearic acid | 1 | 1 | 1 | 1 |
| Zinc white | 5 | 5 | 5 | 5 |
| Sulfur | 1 | 1 | 1 | 1 |
| Vulcanization accelerator TT | 1 | 1 | 1 | 1 |
| Vulcanization accelerator DM | 0.5 | 0.5 | 0.5 | 0.5 |
| Tensile strength ($kg/cm^2$) | 129 | 155 | 148 | 140 |
| Elongation (%) | 630 | 720 | 840 | 860 |
| 100% modulus ($kg/cm^2$) | 7.8 | 6.5 | 6.0 | 5.5 |

As apparent from Table 4, even when a part of the butyl rubber-bromobutyl rubber composition is replaced with EPT, a result similar to those of Examples 1 and 2 was obtained.

EXAMPLE 4

Rubber compositions having a compounding recipe as shown in the following Table 5 were cured and then the retention of tensile strength after aging was measured to obtain a result as shown in Table 5.    As apparent from the results of Table 5, the retention of tensile strength after aging is increased by the addition of EPT as compared with the use of a butyl rubber-bromobutyl rubber composition containing no EPT as well as the use of butyl rubber alone.

Table 5

| Run No.<br>Compound-<br>ing recipe<br>(part by weight) | 26 | 27 | 28 |
|---|---|---|---|
| IIR 268 | 100 | 80 | 60 |
| EPT | - | - | 20 |
| Br - IIR | - | 20 | 20 |
| SRF | 30 | 30 | 30 |
| Spindle oil | 10 | 10 | 10 |
| Stearic acid | 1 | 1 | 1 |
| Zinc white | 5 | 5 | 5 |
| Sulfur | 1 | 1 | 1 |
| Vulcanization accelerator TT | 1 | 1 | 1 |
| Vulcanization accelerator DM | 0.5 | 0.5 | 0.5 |
| Tensile strength (kg/cm$^2$) | 129 | 144 | 155 |
| Retention of tensile strength after the aging (%) | 50 | 56 | 60 |

Aging condition : 150°C × 20 hours

- 1 -    **0039990**

CLAIMS :

1.      A butyl rubber composition, characterized by comprising 90 to 60 parts by weight of butyl rubber, 10 to 40 parts by weight of halogenated butyl rubber, and not more than 50 parts by weight of carbon black based on 100 parts by weight of the total amount of the said rubber components.

2.      A butyl rubber composition as claimed in Claim 1, characterized in that a part of the said rubber components is replaced by 10 to 20 parts by weight of ethylene-propylene terpolymer.

3.      A butyl rubber composition, characterized by comprising 80 to 40 parts by weight of butyl rubber, 10 to 20 parts by weight of ethylene-propylene terpolymer, 10 to 40 parts by weight of halogenated butyl rubber, and not more than 50 parts by weight of carbon black based on 100 parts by weight of the total amount of the said rubber components.

4.      A butyl rubber composition as claimed in any of Claims 1 to 3, characterized in that the halogenated butyl rubber is chlorobutyl rubber or bromobutyl rubber.

0039990

1/1

# EUROPEAN SEARCH REPORT

**European Patent Office**

Application number

EP 81 30 1355

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | FR - A - 1 258 505 (ESSO RESEARCH & ENGINEERING) <br> * Abstract; page 1, left-hand column, line 1 - page 2, right-hand column, line 4 * <br><br> -- | 1,4 | C 08 L 23/22 |
| | FR - A - 1 315 458 (MONTECATINI) <br> * Abstract; page 2, lines 26-30 * <br><br> -- | 2,3 | |
| | US - A - 3 250 733 (A.A. GILLER) <br> * Claim 1; column 1, line 64 - column 2, line 33; column 3, lines 13-45 * <br><br> -- | 1,4 | **TECHNICAL FIELDS SEARCHED (Int. Cl.³)** <br><br> C 08 L 23/22 |
| A | US - A - 3 968 076 (A.M. GESSLER) <br> * Claims 1,5,9 * <br><br> ---- | 1 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 20-08-1981 | GOOVAERTS |

EPO Form 1503.1 06.78